# EUROPEAN PATENT APPLICATION

(11) **EP 4 546 712 A1**
(43) Date of publication of application: **30.04.2025**
(21) Application number: 23205923.8
(22) Date of filing: 25.10.2023
(51) Int. Cl.: H04L 9/40, G06F 21/60

(54) **SYSTEM AND METHOD FOR WEIGHTED DISTRIBUTED MULTI-AUTHORIZATION**

(71) Applicant: THALES DIS CPL USA, INC., Austin, TX 78759 (US)
(72) Inventor: UPADHYAY, Abhay, 201310 Uttar Pradesh (IN); MITTAL, Harshu, 110044 New Delhi (IN); NIGAM, Ashish Sharan, 201309 Uttar Pradesh (IN); ASAD, Uzair, 202001 Uttar Pradesh (IN); SHARMA, Abhishek Kumar, 208007 Uttar Pradesh (IN)
(74) Representative: Lotaut, Yacine Diaw

(57) **Abstract**

A method (500) or system (100) for client authorization allowing authorization officers (AOs) (102) to authorize a change in configuration settings includes a security module (104, 204) enabling the change in configuration settings for one or more among a plurality of client devices (110), and one or more processors that execute computer instructions causing certain operations. In some embodiments, the operations include setting (502) preferences for at least one configuration setting for one or more client devices, setting (504) an authorization policy for the configuration setting, allowing an authorization action with credentials and further storing a preference record (100, 2) that enables or disables the preference record for the authorization officer to handle authorization events while absent, and applying (506) the authorization policy using an authorization weightage system that enables the change in the at least one configuration setting when a minimum weightage of authorization from a required number of authorization officers within a given time frame is obtained.

## Description

### TECHNICAL FIELD

The present embodiments relate generally to systems and methods of administrative management for computer systems. More particularly, the system and method relate to a weighted distributed multi-authorization system and method for managing configurations of various sensitivities.

### BACKGROUND

Changing sensitive configuration settings for a computing or networking system may require authorization from an administrator and also one or more authorizing officers (AO). Authorization is straight-forward when all involved parties are on premises and the AOs are present locally at a device. In such situations, the authorization can be done in-person with strong authentication credentials in trusted locations. There may be offline mechanisms that ensure all AOs are available prior to making changes to sensitive configuration settings. The challenge occurs when changes are needed rapidly and not all conditions are met where all the AOs and administrator are available locally or at a trusted location. Furthermore, there is no mechanism for allowing a flexible multiple authorizations for changing settings where the sensitivities of the settings may vary, or the credentialing of the AOs may be suspect, or where the location of the AOs may not be trusted. None of these variables are typically considered holistically in an integrated system to allow efficiency and flexibility to administrators.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a system for client authorization allowing authorization officers (AOs) to authorize a change in configuration settings can include a security module enabling the change in configuration settings for at least one client device, and one or more processors and memory operatively coupled to the one or more processors, where the memory includes computer instructions which when executed by the one or more processors causes the one or more processors to perform certain operations. The operations can include setting preferences for at least one configuration setting, setting an authorization policy for the at least one configuration setting, and applying the authorization policy using an authorization weightage system that enables the change in the at least one configuration setting when a minimum weightage of authorization from a required number of authorization officers within a given time frame is obtained.

In some embodiments, the system for client authorization further includes a user interface allowing an authorization officer to perform an authorization action with credentials, store a preference record, and enable or disable usage of the preference record.

In some embodiments, the system is a mobile application operating on a device belonging to the authorization officer and wherein the authorization officer can set preferences and handle authorization events.

In some embodiments, the system for client authorization includes a list of all sensitive operations and wherein the authorization officer sets an action among approve, reject or abstain for each sensitive operation in the list for the preference record.

In some embodiments, the system for client authorization stores the authorization officer's preference record in a database that is used on behalf of the authorization officer in their absence wherein the system operates in one of two modes including an authorization officer present mode and an authorization officer not present mode.

In some embodiments, the system in the authorization officer present mode in response to the authorization officer checking for any pending requests, the system tries to fetch all pending authorization requests from the device, the system presents a list of pending requests waiting for the authorization officer, the system receives authorization officer credentials, and if the authorization officer authenticity is confirmed, the system implements the authorization action sent by the authorization officer.

In some embodiments, the system in the authorization officer not present mode in response to the authorization officer enabling the system for usage of the preference record and the system checking for any pending requests, the system fetches the preference record corresponding to the sensitive configuration setting from the database, sending or not sending the authorization action in accordance with the preference record.

In some embodiments, the system operates as an application or as a service on a cloud with a database as a backend and a web user interface as a front end.

In some embodiments, the authorization policy uses one or more of the following attributes for assessing a level of trust in authorization including location from where the authorization action takes place, a level of credentialing used to authenticate the authorization officer, or whether authorization is done in-person or by the system using the preference records.

In some embodiments, the authorization weightage system is configurable and has values assigned based on one or more parameters among criticality of a sensitive operation, in-person availability of the authorization officer, location of the authorization officer, and credentialing used by the authorization officer.

In some embodiments, the authorization weightage system further has assigned a maximum number of participants for the required number of authorization officers.

In some embodiments, the authorization weightage system scales accordingly a set of weightage values from most trusted to least trusted comprising in-person, trusted location, using strong credentials; in-person, trusted location, using weak credentials; in-person, less trusted location, using strong credentials; in-person, less trusted location, using weak credentials; and automatic authorization using the authorization officers' preference records.

In some embodiments, a system for client authorization allowing authorization officers (AOs) to authorize a change in configuration settings can include a security module enabling the change in configuration settings for a plurality of client devices, one or more processors and memory operatively coupled to the one or more processors, where the memory includes computer instructions which when executed by the one or more processors causes the one or more processors to perform certain operations. In some embodiments, the operations can include setting preferences for at least one configuration setting one or more of the plurality of client devices, setting an authorization policy for the at least one configuration setting, allowing an authorization action with credentials via a user interface and further store a preference record and enable or disable usage of the preference record that enables the authorization officer to handle authorization events while absent when the usage for the preference record is enabled, and applying the authorization policy using an authorization weightage system that enables the change in the at least one configuration setting when a minimum weightage of authorization from a required number of authorization officers within a given time frame is obtained.

In some embodiments, the authorization policy uses one or more of the following attributes for assessing a level of trust in authorization including location from where the authorization action takes place, a level of credentialing used to authenticate the authorization officer, or whether authorization is done in-person or by the system using the preference records.

In some embodiments, the authorization weightage system is configurable and has values assigned based on one or more parameters among criticality of a sensitive operation, in-person availability of the authorization officer, location of the authorization officer, and credentialing used by the authorization officer.

In some embodiments, the authorization weightage system further has assigned a maximum number of participants for the required number of authorization officers.

In some embodiments, the authorization weightage system scales accordingly a set of weightage values from most trusted to least trusted comprising in-person, trusted location, using strong credentials; in-person, trusted location, using weak credentials; in-person, less trusted location, using strong credentials; in-person, less trusted location, using weak credentials; and automatic authorization using the authorization officers' preference records.

In some embodiments, a method for client authorization allowing authorization officers (AOs) to authorize a change in configuration settings using at least a security module in a system enabling the change in configuration settings for at least one client device where the system includes one or more processors and memory operatively coupled to the one or more processors, and where the memory includes computer instructions which when executed by the one or more processors causes the one or more processors to perform certain operations. In some embodiments the operations in the method can include setting preferences for at least one configuration setting, setting an authorization policy for the at least one configuration setting, and applying the authorization policy using an authorization weightage system that enables the change in the at least one configuration setting when a minimum weightage of authorization from a required number of authorization officers within a given time frame is obtained.

In some embodiments, the authorization policy uses one or more of the following attributes for assessing a level of trust in authorization including location from where the authorization action takes place, a level of credentialing used to authenticate the authorization officer, or whether authorization is done in-person or by the system using the preference records.

In some embodiments, the authorization weightage system is configurable and has values assigned based on one or more parameters among criticality of a sensitive operation, in-person availability of the authorization officer, location of the authorization officer, and credentialing used by the authorization officer.

### BRIEF DESCRIPTION OF THE DRAWINGS

The accompanying drawings, which are incorporated in and constitute a part of this description, illustrate embodiments consistent with the embodiments and, together with the description, serve to explain the principles of the embodiments.
**FIG. 1A** illustrates a system flow for a basic authorization scenario in accordance with the embodiments;
**FIG. 1B** illustrates a system or component flow diagram of an multi-authorization method where AOs are present locally or not present locally (or not present at all) in accordance with the embodiments;
**FIG. 2** illustrates a block diagram of system components including an administer application and client device having a policy for changing settings in accordance with the embodiments;
**FIG. 3A** illustrates a chart for various sensitive settings having a corresponding policy, and assigned minimum weightage for minimum number of persons out of a total number of persons (M of N) in accordance with the embodiments.
**FIG. 3B** illustrates another chart that assigns various weightage values for different scenarios that include variables of in-person authorization or off-site, strong or weak credentialing, and trusted or untrusted locations in accordance with the embodiments.
**FIG. 3C** illustrates another chart that assigns various minimum weightage values for different scenarios that include variables of in-person authorization or off-site, and a maximum number of authorization responses in accordance with the embodiments.
**FIG. 4** illustrates a block diagram of a system of multi-authorization in accordance with the embodiments
**FIG. 5** illustrates a flow chart of a method of multi-authorization in accordance with the embodiments.

Specific embodiments have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments. Instead, they are merely examples of apparatuses and methods consistent with aspects related to the embodiments as recited in the appended claims.

Before describing the embodiments in detail, a few definitions for terms or concepts can provide better clarity as to the components and operations or methods incorporated herein including sensitive configurations, weightage, weightage value, preference record, metadata, credentials, location, and authorization policy among others. Although the definitions are provided with a particular context or environment in mind, the definitions are not intended to limit the scope or context of the embodiments and reference should be made to the claims to provide the broadest reasonable scope of the embodiments claimed.

**Sensitive configurations** are generally any configuration settings which require approvals from multiple AOs like change pin length, allow non-standard algorithms, or change keys settings. There can be many sensitive configurations and some may be sensitive in certain scenarios and not sensitive in other scenarios. An administrator, developer, designer, an AI, or even generative AI may decide what is a "sensitive" configuration. As the name implies, it is configurable by the user.

**Weightage** signifies a level of trust in the authorization received from different Authorizing Officers located remotely or locally in certain instances. It can be based on the various attributes received in the metadata from a client authorization system. Using the weightage system, the admin can configure a highly restrictive authorization policy, for example, where all required authorizing officers should be present at a trusted location and must use strong credentials to authorize the change in a configuration setting, or they can configure a less restrictive policy where all other authorizations (maybe except for one) could be done in absence of the remaining AOs. An even less restrictive policy would allow authorization with all AOs being absent.

A **Weightage value** can be assigned by an admin based on various parameters such as the criticality of a Sensitive Operation or configuration and based on the In-person availability of AO. The weightage value can be configurable by the admin based on any number of parameters.

A **Preference record** is generally used to store authorization officer's preferences for each sensitive configuration setting so that they could be utilized to authorize any change in configuration setting when AO is not available. These could be useful in various scenarios for instance in time-bound authorization. If a setting is configured for a limited time and when it expires, then again it will require all the authorization officers to gather and authorize the activity.

**Metadata** are the additional information that the device will require to assess the level of trust (i.e., weightage in the authorization). Metadata will be implicitly sent by the client application or authorization service along with the authorization response data to the device. Administrator as per use case scenario will decide a list of attributes that can be considered as a part of metadata.

Here are few of the examples of metadata: **In person authorization by AO; Trusted Location** e.g., office premise. AO was present at trusted location while performing the authorization; and **Credentials** - AO used strong credentials to identity themselves before performing the authorization.

In some embodiments, each metadata can have an attribute and corresponding value designated. For example, the attribute "Location" can have a value of "Trusted" or "Untrusted" where the AO's machine could be at a trusted or an untrusted location when the AO performs the authorization. An example of a trusted location could be an Office premise while the AO's home location could be considered as untrusted. Location refers to the geographical location from where the AO performs the authorization. The client application needs to collect this information and sent it to the device as part of metadata. The Administrator will define the criteria for trusted and less trusted locations and accordingly define the different weightage base in location type. For example, an Office premise could be considered as a more trusted location compared to home VPN network.

In another example, the attribute "Credentials" can have a value of "Strong" or "Weak". The credentials used by the AO while authenticating to a client system could use strong credentials with the use of a smartcard/pin or have weak credentials with the use of username/password. The authorization officer uses credentials to authenticate before authorizing the request. Credentials will be used to estimate the overall weightage, i.e., a level of trust in the authorization action performed by the authorization officer. Use of smartcards and pins or usernames and passwords are only a few examples of credentials that an authorization officer might use. Multifactor authentication could also be considered among other techniques for assessing a level of trust.

In yet another example, the credential of "AO presence" can have a value of "Present" or "Absent". Authorization could be performed by the AO or by client system on behalf of AO when the AO is absent. When the client system performs authorization on behalf AO, then it will refer to the preference record to send the authorization action (to allow or deny) to the device.

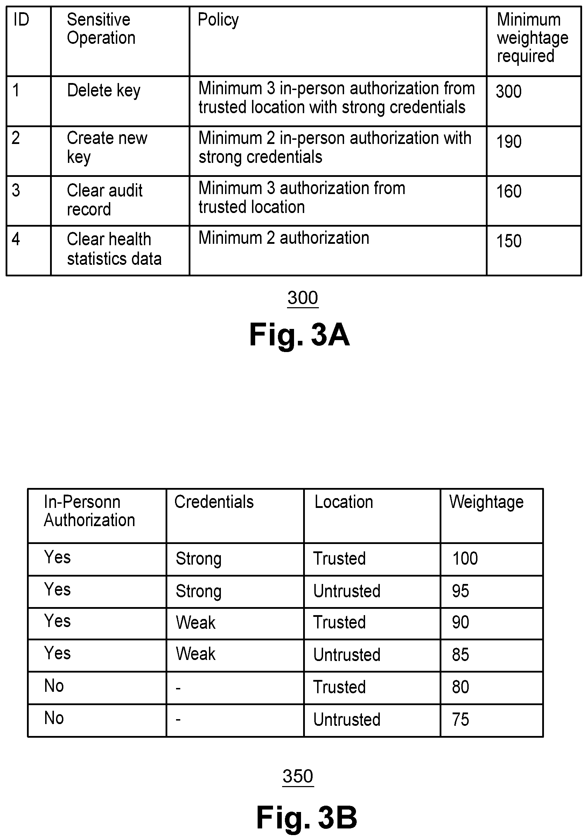

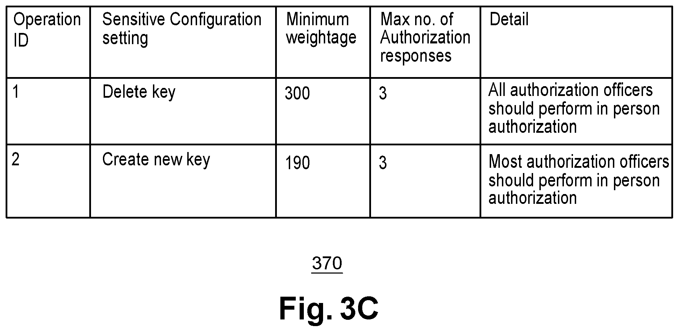

An **Authorization Policy** is a policy that is typically set by a device administrator for each sensitive configuration setting. The authorization policy can come in many forms, but can typically be implemented using charts or databases such as the ones shown in FIGs. 3A, 3B, or 3C. In one example as shown in FIG. 3C, each sensitive configuration setting can have an Operation ID, minimum weightage, maximum number of authorization responses, and a detail of the policy for the setting. The "delete key" sensitive configuration setting, for example, can be assigned operation ID #1 and have a minimum weightage of "300" and requiring a maximum of 3 authorization responses where all AOs should perform the authorization in person. In some implementations, a minimum number of authorization responses may be required despite reaching a minimum weightage. The charts shown are just for illustrative purposes and the variety of charts, settings, weightages, and policies in general should not be limited by just the examples shown.

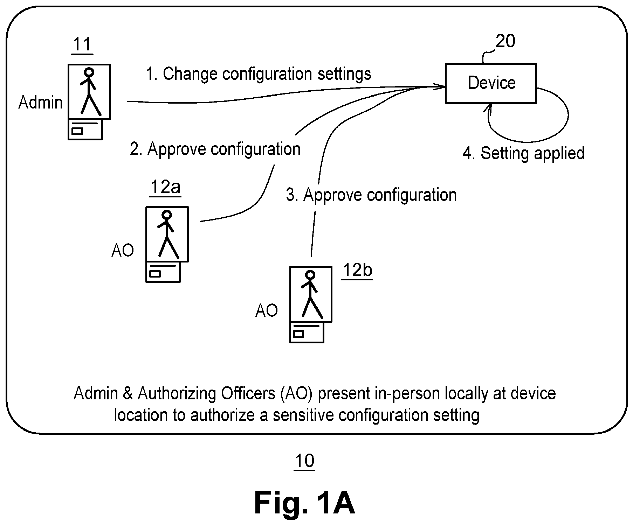

A system in accordance with the embodiments for weighted distributed multi-authorization include various elements and components that should be described initially before further detailing the embodiments. With reference to the system 10 of FIG. 1A, a device 20 can be a hardware appliance that performs critical operations, requires authorization before applying any sensitive configuration settings on the device 20, and is deployed either in an enterprise premises or in a cloud data center where an administrator 11 and/or authorization officer (AO) 12a or 12b may not be physically available to perform any action on the device. A payment Hardware Secure Module (HSM) or a general purpose HSM deployed in a cloud environment can be considered an included embodiment within the scope of the appended claims. In some embodiments, an example also includes a payment HSM or general purpose HSM deployed in a cloud environment. In a simple example, the Admin 11 would request a change in configuration settings in the device 20 at step 1, a first AO (12a) would approve the configuration at step 2, a second AO (12b) would approve the configuration at step 3, and the device 20 would apply the setting change at step 4 after receiving the approvals. In an in-person scenario where all the parties and elements are local, such changes can be straight- forward and trusted, but more frequently, more and more elements and parties are remote. Next we further define the different parties and elements or components involved.

The administrator 11 or Admin is a user with an administrator role, who manages the device 20 and performs the configuration settings on the device. With respect to the embodiments, the administrator 11 will perform some additional tasks on the device including setting authorization policy for each sensitive operation. Each policy would comprise of a minimum weightage and maximum number of participants.

The authorization officer or AO (12a or 12b) is a user with an authorization officer's role having the responsibility to allow or disallow a change in configuration settings on the device 20 (e.g., changing a PIN length).

The client authorization system 10 is a system that helps the AO to perform authorization actions remotely.

Critical devices such as a payment HSM contains various types of sensitive configuration settings (e.g., delete key, audit record reset, pin attack limit, etc). Since these settings are very critical for the device's operation, any changes in these settings require approval from authorization officers (12a and/or 12b or both depending on policy). Only two AOs are shown for simplicity, but a system can certainly include more than 2 AOs and a minimum number out of a total number of AOs (M of N) to implement a desired change. Depending upon the criticality of a setting, the client authorization system 10 may require authorization from multiple authorization officers. The process of performing change, getting approval from authorization officers, and applying the change on the device is easy when the admin 11 (performing the changes), the authorization officers (approving the changes) and the device (where change is applied) are all on site or present at same location.

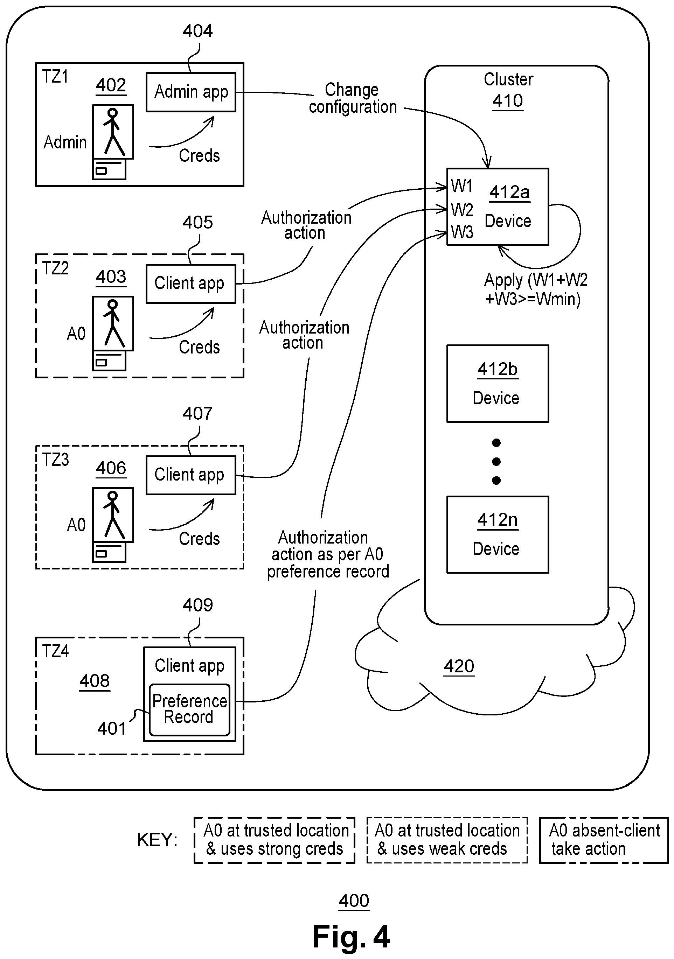

The authorization process could become very challenging when the device is deployed in a cloud environment and the administrator, and the authorization officers are all present in geographically distributed locations or even different time zones. As administrator and authorization officers can be accessing the device remotely from different time zones, it may be possible that all authorization officers are not available when the administrator performs the intended changes. This scenario results in delay in applying the changes and in some cases even in rejection of the change as required authorization not received within an allowed time limit. The problem could even become bigger when such remote authorization needs to be done for multiple devices deployed in a cluster in a cloud environment (see FIG. 4) or across multi-cloud environment.

To solve the problems discussed above, a two-fold solution is presented. The first part is having a client authorization system, which would be capable of making an authorization decision on the authorization officer's behalf when authorization officer is not present. This solves a first part of problem, namely how authorization is provided by an AO or AOs when authorization officer(s) are not available.

Due to the nature of this new authorization where authorization is being performed remotely, and in some case automatically without authorization officers being present, there could be a trust deficit in the authorization received at the device.

To address the trust deficit problem, the second part of the solution assigns weights to authorization approvals. "Weight" in this context signifies the level of trust in authorization depending upon how the authorization action is performed. For instance, if authorization is performed in-person by authorizing officer, using strong credentials with a smartcard and pin and from a trusted location (such as an office premise), then the authorization could be considered as a highly trusted authorization and could be assigned a weightage as 100 on the scale of 1 to 100. In contrast, if authorization is performed automatically by the client authorization system based on the authorization officer's preference record, then it could be considered a less trusted authorization and could be assigned a weightage such as 75 on the scale of 1 to 100. Details of assigning numbers to trust level is discussed later with respect to FIGs 3A and 3B.

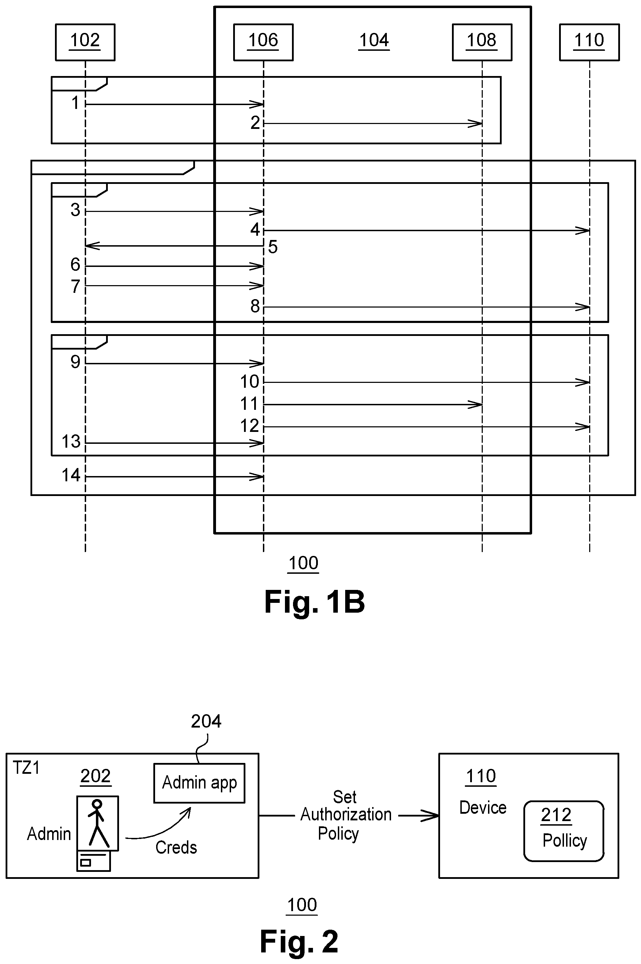

To apply the embodiments with a particular example with further reference to the system 100 of FIG. 1B, some or all of the components and functionalities should be included. First, a client authorization system 104 should be included that allows authorization officers (AO) 102 to authorize a change in configuration settings on the device 110 using an application 106 and database 108 as part of the client authorization system 104. The client authorization system 104 also provides a feature for automatic authorization when an authorization officer is not available or not present.

With further reference to FIG. 2, the system 100 can further include an Authorization policy 212 that is set by the administrator 202 on the device 110 for each sensitive configuration setting. Based on the criticality of the configuration setting the policy 212 could be very stringent or less stringent. For example, changing the pin attack limit will require a stringent policy, whereas, resetting health records may not require such stringent a policy. (See FIG. 3A)

The system can further apply settings based on authorization weightage. The device can apply a change only when it gets the minimum weightage of authorization from a required number of authorization officers within a given time frame.

There could be various ways to implement the client authorization system. Before further detailing specific implementation details of the system, some of the requirements for in some of the embodiments of client authorization system is further disclosed. In some embodiments, the client authorization system must provide some of the following functions. The system should be able to fetch pending authorization requests. The system should be available always to allow authorization at any time. Additionally, the system should provide a user interface to each authorization officer to allow them to perform and authorization action with credentials (smartcard/pin or username/password), store a preference record (to be used later when authorization officer not present), and to enable or disable the usage of the preference record.

Referring to the system 100 of FIG. 1B again, a few use case scenarios are illustrated how an authorization officer interacts with the system. In one embodiments, the client authorization system is running on the authorization officer's device (110) where the authorization system is a mobile application (106) running on the authorization officer's device. In such a case, the following describes the sequence flow of the interaction between various entities involved. Note that there are two sets of operations that the authorization officer can perform, namely setting preferences and handling authorization events.

At Step 1, each Authorization Officer 102 sets the preference for all sensitive operations. The app 106 running in the client authorization system 104 will show the list of all sensitive operations along with other details (e.g., ID, operation name, etc..). For each sensitive operation, the authorization officer 102 can set an action (e.g., to approve, reject, or do not participate) in the preference record. At Step 2, the Application 106 will store the authorization officer's preference record in persistent storage (such as the database 108, or File, etc..). The client authorization system 104 will utilize these preference records when it acts on behalf of authorization officer 102. In handling authorization events, there are typically two scenarios or modes since the authorization request could be triggered at any time and it may be possible that the authorization officer is not available to act on them. The first mode is "Authorization Officer Present" and the second mode is "Authorization Officer Not Present".

Steps 3-8 illustrate the AO Present mode. At Step 3, the AO chekcs for any pending requests. At Step 4, the client authorization system 104 tries to fetch all pending requests waiting for action by the AO. At Step 5, the client authorization systems shows or presents the list of pending requests waiting for AO action. At Step 6, the AO provides their credentials such as a smartcard and pin or username and password. At Step 7, once the AO authenticity is confirm, the AO provides the authorization action for each pending request. At Step 8, the client authorization system 104 sends the authorization acrtion along with some metadata (such as location, credential type, etc.) to the device 110.

There could be scenario when authorization officer may not be present to provide the authorization action. Steps 9-13 illustrate the AO Not Present mode. To handle such scenario, the authorization officer 102 needs to enable the usage of preference records. Thus, at Step 9 in the AO Not Present mode, the AO 102 enables the usage of the preference record before leaving the premise. This implies that authorization officer wants the client authorization system 104 to act on behalf of authorization officer 102. At Step 10, the client authorization system 104 will check for any pending requests from the device 110. At Step 11, if there are any pending requests for any sensitive configuration setting, then the client authorization system 104 will fetch the preference record corresponding to the sensitive configuration setting from the persistent storage (in this case, the database 108). The client authorization system 104 then sends the authorization action as per the preference record along with metadata (AO not present) at Step 12. If the preference record has set the action as 'Do not participate', then the client authorization system will not send any data to device. Once the authorization officer resumes to work and wants to take authorization action by himself or herself, then the AO can disable the automatic authorization. At Step 13, the Authorization Officer resumes work and can disable preference records. Since the authorization officer is now available, any pending request can be checked by AO at Step 14.

There could be other manifestation of client authorization system where the application may be available as service in the cloud with a database as backend and web user interface (UI) as a front end. But essentially the application needs to fulfill the requirements stated above.

Another important element of the embodiments is the authorization policy that the administrator sets on the device for each sensitive operation as reflected in the charts 300 and 350 FIGs. 3A and 3B respectively.

In some embodiments, the Administrator can set the authorization for each sensitive configuration setting or operations. Depending upon the criticality of the configuration setting, the administrator can set a specific policy, for example, a policy that has stringent requirements where all approvals must be from trusted locations only. (See policy ID 1 for "Delete Key" or policy ID 3 for "Clear audit record" where trusted locations must be used). In other examples, the administrator can set a generic policy or a policy that has relaxed requirements where approval from preference records set by authorization officer will be allowed without some many limitations required regarding trusted location. (See policy ID 4 for "Clear health statistics data" where just 2 authorizations are required without requiring a trusted location.

The Authorization policy will be used to enforce the level of trust in authorization. Due to the remote distributed nature of the system, there could be various factors that need to be considered while assessing the level of trust in the authorization action received from various authorization officers. As these attributes can vary on a case-to-case basis, it can be up to the administrator to decide what is the right set of attributes needed for a given deployment. Disclosed are a few of the possible examples of attributes that could be considered in assessing the level trust in authorization. The scope of the embodiments contemplate any number and any combination of attributes and such attributes are not necessarily limited to the attributes disclosed herein.

Such attributes can include location from where the authorization action is taken, the credentials used to authenticate the AO, and/or the nature of the authorization as to whether it is done in person or an authorization done in absence (e.g., using preference records). Each combination forms a scenario where the administrator (or a third party developer or designer or an AI or generative AI perhaps) can assign a certain weightage for each combination as shown in the chart 350 in FIG. 3B.

With respect to the location from where the authorization action is taken, authorization performed from office premises will have a more trusted level compared to an authorization that is performed from a home network. Depending upon the use case, the administrator could further consider more detailed information such as how the location information is collected (e.g., was the location obtained from a GPS or was it IP address based, was the GPS installed in tamper proof region or outside). Such scenarios can further be assessed and weighted accordingly with further granularity.

With respect to credentials used to authenticate the authorization officer, if the authorization officer used strong credentials like a smartcard/pin combination to perform the authorization, then that could be considered as more trustworthy compared to an authorization officer using a username/password combination. Depending upon the scenario, the administrator could also consider other types of two-factor or multi-factor authentication.

With respect to In-person authorization or in-absence authorization, while configuring the authorization policy, the administrator may also consider whether authorization is performed in-person by the authorization officer or was it done by client authorization system using the preference records when the AO was absent.

Weightage as shown in FIG. 3B signifies the level of trust in the authorization received from different Authorizing Officers located remotely (or in-premise). Using the weightage system, the admin can configure a highly restrictive authorization policy where all required authorizing officers should be present at a trusted location and must use strong credentials to authorize the change in configuration setting, or they can configure a less restrictive authorization policy where, for example, an authorization could be done automatically by client system using just preference records. So the embodiments herein provide the administrator a large degree of flexibility on the availability of authorization officers when the change is made.

As noted previously, weightage value will be assigned by the admin based on various parameters that can include the criticality of a sensitive operation, the In-person availability (or lack thereof) of an authorization officer, the location of the authorization officer, and/or the credentials used by authorization officer.

There are instances where such a scheme might elicit a false positive approval. While designing weightage criteria, it is also very important to identify scenarios which may lead to cases of false approvals, by the virtue of automatic approvals set by different authorization officers. One important criterion while assigning minimum weightage required to apply a change in a sensitive configuration setting is that the administrator also needs to assign a maximum number of participants in the approval process. Otherwise, a scenario could exist where multiple least trusted entities could come together and get a change applied on the device that would be outside the intent of the admin.

In some embodiments, an administrator can choose different scales to set weightage values. For example, the administrator may choose a scale of 100 - 0 where, 100 is considered most trusted and 0 is not trust at all in the authorization approvals. Also, the interval by which the level of trust gaps down can be chosen by the administrator as per their requirements. Here are few examples of the scales:

This scale starts with 100 and ends at 80 with a gap of 5 at each level trust:

| Weight | Trust level | Description |
|---|---|---|
| 100 | Most trusted | Authorization should be in-person from a trusted location using strong credentials. |
| 95 | | Authorization should be in-person from a trusted location using weak credentials. |
| 90 | | Authorization should be in-person from less trusted location using strong credentials. |
| 85 | | Authorization should be in-person from less trusted location using weak credentials. |
| 80 | Least trusted | Authorization may be automatic using authorization officers' preference records |

This scale starts with 10 and ends at 6 with gap of 1 at each level of trust:

| Weight | Trust level | Description |
|---|---|---|
| 10 | Most trusted | Authorization should be in-person from a trusted location using strong credentials. |
| 9 | | Authorization should be in-person from a trusted location using weak credentials. |
| 8 | | Authorization should be in-person from less trusted location using strong credentials. |
| 7 | | Authorization should be in-person from less trusted location using weak credentials. |
| 6 | Least trusted | Authorization may be automatic using authorization officers' preference records |

The charts above and the one shown in FIG. 3B are some examples to show relation between weightage number and level of trust. The administrator needs to decide what scale and interval to choose based on different trust attributes.

With the two main pre-requisites for an overall solution described including setting up a preference record by an authorization officer and setting up an authorization policy by administrator, a further view of the complete solution can be seen in action.

Once an Administrator has set the authorization policy for configuration settings and Authorization officers who may not be available have set the preference records and have enabled the client authorization to act based on preference records, the environment is ready to operate in accordance with the embodiments.

In some embodiments, a device 412a as illustrated in the system 400 of FIG. 4 can be a part of cluster 410 of similar devices 412b thru 412n (hosted in cloud environment 420). The Administrator 402 can remotely access the device 412a from some geographical location in Time Zone TZ1 using the admin application 404 (after the administrator's credentials are accepted). FIG. 4 further shown one of the authorization officers (403) is currently available at remote location in Time zone TZ2. He will use strong authentication credentials like smartcard/pin to authorization any change on the device 412a via the client application 405. A second authorization officer 406 is also available but at some different location in Time zone TZ3. AO 406 does not necessarily have a smartcard/pin and instead uses a username/password to authenticate any authorization any change on the device 412a via the client application 407. Finally, a third authorization officer 408 is not available (the AO is absent) to act on the device, but preference records 401 set via the client application 409 for each sensitive configuration setting are already configured by the AO 408. The client authorization system would also be enabled to act on behalf of AO as per settings done in the preference records 401, if there are any authorization request pending at the device.

In such a scenario shown in FIG. 4, a possible sequence flow would include a first action where the Administrator 402 (in time zone 1) changes the configuration setting on the device 412a. Since this setting requires approval from a predetermined number of authorization officers, the device 412a waits for prerequisite number of authorization officer responses. In a second action, the Authorization officer 403 (in time zone 2) is available. At some point in time, the authorization officer 403 will ask client authorization system to check for any pending requests. Internally, the client app 405 will fetch pending request from the device 412a. The client app 405 will then show the pending request to authorization officer 403. Next, the authorization officer 403 provides a smartcard/pin combination to authenticate and the authorization officer 403 provides authorization action approving the change on behalf of authorization officer 403. Accordingly, the client app 405 sends the authorization action along with metadata (AO was present, AO used strong credentials, AO was at remote location, etc.) to the device 412a. In a third action, the Authorization officer 406 (in time zone 3) is available. At some point, the AO 406 will ask the client app 407 to show any pending requests. Client app 407 will check for any pending authorization requests from device 412a and show it the AO 406. AO 406 will provide credentials (in this case, AO 406 uses username/password) and the authorization action. The Client app 407 then sends the AO authorization action along with metadata (AO was present, AO used weak credentials, AO was at remote location, etc.) to the device 412a.

Meanwhile, in a fourth action, the Authorization officer 408 (in time zone 4) not present. The Client authorization system 400 checks if there any pending request at the device 412a. The system 400 also checks if the AO 408 has enabled the use of preference records 401 as would be stored as part of the client application 409 in some embodiment. The system 400 would then fetch the preference record 401 corresponding to the configuration setting for which approval is pending and send the authorization action from preference record 401 along with metadata (AO not available) to the device 412a.

In a fifth action, the device 412a checks if it received the required weightage of authorization from allowed number of participants (i.e., max number of Authorization officers) as per the policy configured. If yes, the change is applied, otherwise the proposed change is discarded after a time limit is expired.

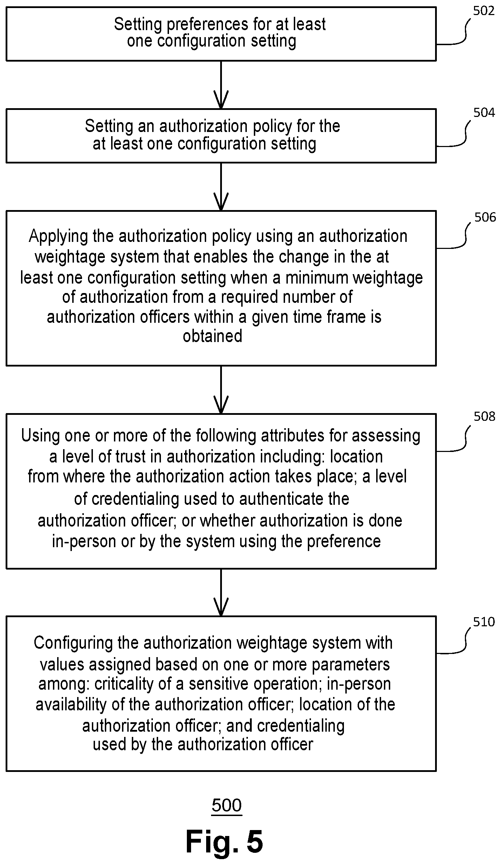

Referring to the flow chart of FIG. 5, a method 500 is shown for client authorization allowing authorization officers (AOs) to authorize a change in configuration settings using at least a security module in a system enabling the change in configuration settings for at least one client device where the system includes one or more processors and memory operatively coupled to the one or more processors. The memory can include computer instructions which when executed by the one or more processors causes the one or more processors to perform certain operations. In some embodiments the operations in the method can include at Step 502 of setting preferences for at least one configuration setting, at Step 504 of setting an authorization policy for the at least one configuration setting, and at Step 506 of applying the authorization policy using an authorization weightage system that enables the change in the at least one configuration setting when a minimum weightage of authorization from a required number of authorization officers within a given time frame is obtained.

In some embodiments as shown at Step 508, the authorization policy uses one or more of the following attributes for assessing a level of trust in authorization including location from where the authorization action takes place, a level of credentialing used to authenticate the authorization officer, or whether authorization is done in-person or by the system using the preference records.

In some embodiments as shown at Step 510, the authorization weightage system is configurable and has values assigned based on one or more parameters among criticality of a sensitive operation, in-person availability of the authorization officer, location of the authorization officer, and credentialing used by the authorization officer.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system (100) for client authorization allowing authorization officers (AOs) (102) to authorize a change in configuration settings, comprising:
a security module (104, 204) enabling the change in configuration settings for at least one client device (110);
one or more processors and memory operatively coupled to the one or more processors, wherein the memory includes computer instructions which when executed by the one or more processors causes the one or more processors to perform the operations of:
setting (502) preferences for at least one configuration setting;
setting (504) an authorization policy for the at least one configuration setting; and
applying (506) the authorization policy using an authorization weightage system that enables the change in the at least one configuration setting when a minimum weightage of authorization from a required number of authorization officers within a given time frame is obtained.

2. The system of claim 1, wherein the system for client authorization further comprises a user interface allowing an authorization officer to perform an authorization action with credentials, store a preference record (100, 2), and enable or disable usage of the preference record.

3. The system of claim 1, wherein the system is a mobile application operating on a device belonging to the authorization officer and wherein the authorization officer can set preferences (100, 1) and handle authorization events (100, 3-8).

4. The system of claim 1, wherein the system for client authorization includes a list (300) of all sensitive operations and wherein the authorization officer sets an action among approve, reject or abstain for each sensitive operation in the list for the preference record.

5. The system of claim 1, wherein the system for client authorization stores the authorization officer's preference record (300) in a database (108) that is used on behalf of the authorization officer in their absence wherein the system operates in one of two modes including an authorization officer present mode (100, 3-8) and an authorization officer not present mode (100, 9-13).

6. The system of claim 5, wherein the system in the authorization officer present mode in response to the authorization officer checking for any pending requests (100, 3), the system tries to fetch (100, 4) all pending authorization requests from the device (110), the system presents a list of pending requests waiting for the authorization officer, the system receives authorization officer credentials (100, 6), and if the authorization officer authenticity is confirmed, the system implements the authorization action sent by the authorization officer (100, 7, 8).

7. The system of claim 5, wherein the system in the authorization officer not present mode (100, 3-8) in response to the authorization officer enabling the system for usage of the preference record and the system checking for any pending requests, the system fetches the preference record corresponding to the sensitive configuration setting from the database, sending or not sending the authorization action in accordance with the preference record.

8. The system of claim 1, wherein the system operates as an application as a service on a cloud (420) with a database as a backend and a web user interface as a front end.

9. The system of claim 1, wherein the authorization policy uses one or more of the following attributes for assessing a level of trust in authorization including location from where the authorization action takes place, a level of credentialing used to authenticate the authorization officer, or whether authorization is done in-person or by the system using the preference records.

10. The system of claim 1, wherein the authorization weightage system (350) is configurable and has values assigned based on one or more parameters among criticality of a sensitive operation, in-person availability of the authorization officer, location of the authorization officer, and credentialing used by the authorization officer.

11. The system of claim 1, wherein the authorization weightage system (300) further has assigned a maximum number of participants for the required number of authorization officers.

12. The system of claim 1, wherein the authorization weightage system (350, 370) scales accordingly a set of weightage values from most trusted to least trusted comprising in-person, trusted location, using strong credentials; in-person, trusted location, using weak credentials; in-person, less trusted location, using strong credentials; in-person, less trusted location, using weak credentials; and automatic authorization using the authorization officers' preference records.

13. A system (100) for client authorization allowing authorization officers (AOs) to authorize a change in configuration settings, comprising:
a security module (104, 204) enabling the change in configuration settings for a plurality of client devices (110);
one or more processors and memory operatively coupled to the one or more processors, wherein the memory includes computer instructions which when executed by the one or more processors causes the one or more processors to perform the operations of:
setting (502) preferences for at least one configuration setting one or more of the plurality of client devices;
setting (504) an authorization policy for the at least one configuration setting;
allowing an authorization action with credentials via a user interface and further store a preference record (100, 2) and enable or disable usage of the preference record that enables the authorization officer to handle authorization events in while absent when the usage for the preference record is enabled; and
applying (506) the authorization policy using an authorization weightage system that enables the change in the at least one configuration setting when a minimum weightage of authorization from a required number of authorization officers within a given time frame is obtained.

14. The system of claim 13, wherein the authorization policy uses (508) one or more of the following attributes for assessing a level of trust in authorization including location from where the authorization action takes place, a level of credentialing used to authenticate the authorization officer, or whether authorization is done in-person or by the system using the preference records.

15. The system of claim 13, wherein the authorization weightage system is configurable and has values assigned (510) based on one or more parameters among criticality of a sensitive operation, in-person availability of the authorization officer, location of the authorization officer, and credentialing used by the authorization officer.

16. The system of claim 14, wherein the authorization weightage system further has assigned a maximum number of participants (370) for the required number of authorization officers.

17. The system of claim 14, wherein the authorization weightage system scales accordingly a set of weightage values from most trusted to least trusted comprising in-person, trusted location, using strong credentials; in-person, trusted location, using weak credentials; in-person, less trusted location, using strong credentials; in-person, less trusted location, using weak credentials; and automatic authorization using the authorization officers' preference records.

18. A method (500) for client authorization allowing authorization officers (AOs) to authorize a change in configuration settings using at least a security module (104, 204) in a system enabling the change in configuration settings for at least one client device (110) wherein the system includes one or more processors and memory operatively coupled to the one or more processors, and wherein the memory includes computer instructions which when executed by the one or more processors causes the one or more processors to perform the operations of:
setting (502) preferences for at least one configuration setting;
setting (504) an authorization policy for the at least one configuration setting; and
applying (506) the authorization policy using an authorization weightage system that enables the change in the at least one configuration setting when a minimum weightage of authorization from a required number of authorization officers within a given time frame is obtained.

19. The method of claim 18, wherein the authorization policy uses (508) one or more of the following attributes for assessing a level of trust in authorization including location from where the authorization action takes place, a level of credentialing used to authenticate the authorization officer, or whether authorization is done in-person or by the system using the preference records.

20. The method of claim 18, wherein the authorization weightage system is configurable and has values assigned (510) based on one or more parameters among criticality of a sensitive operation, in-person availability of the authorization officer, location of the authorization officer, and credentialing used by the authorization officer.
